# EUROPEAN PATENT APPLICATION

(11) **EP 3 708 815 A1**
(43) Date of publication of application: **16.09.2020**
(21) Application number: 20162898.9
(22) Date of filing: 13.03.2020
(51) Int. Cl.: F02D 41/00, F02D 41/06, F02D 41/10, F02D 41/12, B60W 20/19, B60W 30/18, F02N 11/04, F01N 5/04, F02B 37/10, F02B 39/10, B60W 20/13

(54) **METHOD AND DEVICE FOR IMPROVING THE PERFORMANCES OF AN INTERNAL COMBUSTION ENGINE**

(30) Priority: 15.03.2019 IT 201900003827
(71) Applicant: FPT Motorenforschung AG, 9320 Arbon (CH)
(72) Inventor: ZIEGLER, Christian, 9230 FLAWIL (CH); COCOCCETTA, Fabio, 8006 ZURICH (CH)
(74) Representative: Lovino, Paolo

(57) **Abstract**

Method for improving performances of a combustion engine installed in a commercial or industrial vehicle, the internal combustion engine (E) including an electric turbocharger (E-TCU) provided of a first electric motor-generator (EM), a second motor-generator (EMU) operatively coupled with a crankshaft (CK) of the internal combustion engine and the vehicle of an electric power network (EPN) interconnecting the first and second electric motor-generators and a battery pack(BATT); the method including the following steps, when the commercial or industrial vehicle is going to start: controlling said first electric motor-generator (EM) in order to boost the compressor and thus the internal combustion engine and controlling said second electric motor-generator (EMU) to supplement said internal combustion engine (E) only if residual energy is available, otherwise if an available electric energy is not sufficient to supply said first electric motor-generator (EM), then controlling said second electric motor-generator (EMU) to supplement said battery pack (BATT) in supplying said first electric motor-generator. (Fig. 1).

## Description

### Cross-reference to related applications

This patent application claims priority from Italian patent application no. 102019000003827 filed on 15/03/2019.

### Field of the invention

The present invention relates to a method and device for improving an internal combustion engine performances.

### Description of the prior art

The downsizing of the internal combustion engines reduces the engine brake capability and positive torque at low engine speed.

Those commercial vehicles intended to be implemented in the public transportation, cannot be provided of downsized internal combustion engines, due to the low torque developed at low engine speed. Indeed, such vehicles are subjected to frequent stops and restarts, thus 90% of their operation is at low engine speed. Smaller displacement engines develop less torque in comparison with large displacement engines at low engine speed. Thus, downsizing seems to be in contrast with such specific implementation. In the last year, fully electric vehicles have been experimented for public transportation; however, such vehicles are subjected to strong limitations in terms of maximum mileage and maximum speed. Thus, the paths should be selected to permit battery charge or replacement and to avoid high vehicle speeds.

A compromise is offered by the hybrid vehicles, nevertheless, the main engine, namely the internal combustion engine, develops about 200 kW, thus the electric drive should develop at least 50 kW (a quarter of the main engine power) to effectively supplement the internal combustion engine during the frequent starts.

The battery pack should be able to supply the electric drive with 50 kW, however high power batteries are expensive, thus, 50 kW are achieved by implementing several parallels of batteries strings supplying low currents. This solution leads to a high numbers of cheap batteries, which develop a relevant weight and reduce the available space onboard.

In addition, the implementation of hybrid propulsion is almost invasive.

BRM Boost recuperation machines, also called BRS boost recuperation system (as called by Bosch Inc), are known in the field of private automotive. According to the BRM concept an electrical machine is installed capable to crank the internal combustion engine, to charge the battery during braking thanks to energy recuperation, and to help the combustion engine during vehicle acceleration, and could potentially restart the engine as a conventional engine starter, and, while coasting or driving downhill, the BRM / high-power battery enables switching off the internal combustion engine by driving all the relevant consumers, while the vehicle coasts in zero-emission, noiseless, low resistance mode, driven solely by its momentum.

A BRM system typically includes the electric motor, a DC/DC converter and a high-power battery.

The power usually available are about 10 - 20 kW. Thus, such power are unsuitable for the implementation in commercial and industrial vehicles.

### Summary of the invention

The main object of the present invention to propose a propulsion layout capable to improve the engine torque, especially at low engine speed, even in those cases in which engine downsize is operated, namely in those cases in which the engine torque at low engine speed is insufficient for commercial and industrial applications, such as public transportation.

The main concept of the present invention is the implementation of an e-turbocharger paired with a BRM machine.

An e-turbocharger includes a compressor operatively arranged on the inlet line of the internal combustion engine and a turbine operatively arranged on the exhaust line of the same internal combustion engine.

The compressor and the turbine are fixedly connected with the opposite ends of the rotor of one single electric motor-generator. Thus, the opposite ends of the rotor are connected, in one end, with the compressor and, in the opposite end, with the turbine.

The turbine is preferably a VGT (variable geometry turbine) type, namely capable to control its efflux section and thus to control the energy extracted from the exhaust gasses or the turbine has a fixed geometry, but is equipped with a controllable wastegate valve.

According to the invention, after the vehicle stop, when the vehicle starts to move, the electric turbocharger is controlled to boost the internal combustion engine, while the BRM is controlled to supplement the internal combustion engine with the residual available electric energy.

In other words, according to the battery power capacity installed onboard, the electric turbocharger takes precedence with respect to the BRM, because the torque increase delivered to the vehicle driveline caused by the e-turbocharger is sensitively higher than the torque increase caused by the BRM.

Indeed 15 kW in comparison with at least 200 kW developed by the main engine are rather negligible.

In case the battery pack is not capable to completely supply the electric turbocharger, the BRM is controlled to generate electric energy in order to supplement the battery pack.

These and further objects are achieved by means of the attached dependent claims, which describe preferred embodiments of the invention, forming an integral part of the present description.

### Brief description of the drawings

The invention will become fully clear from the following detailed description, given by way of a mere exemplifying and non-limiting example, to be read with reference to the attached drawing figures, wherein:
- Fig. 1 shows a possible layout of the present invention;
- Fig. 2 shows an exemplary control strategy of the layout of figure 1.

The same reference numerals and letters in the figures designate the same or functionally equivalent parts. According to the present invention, the term "second element" does not imply the presence of a "first element", first, second, etc.. are used only for improving the clarity of the description and they should not be interpreted in a limiting way.

### Detailed description of the preferred embodiments

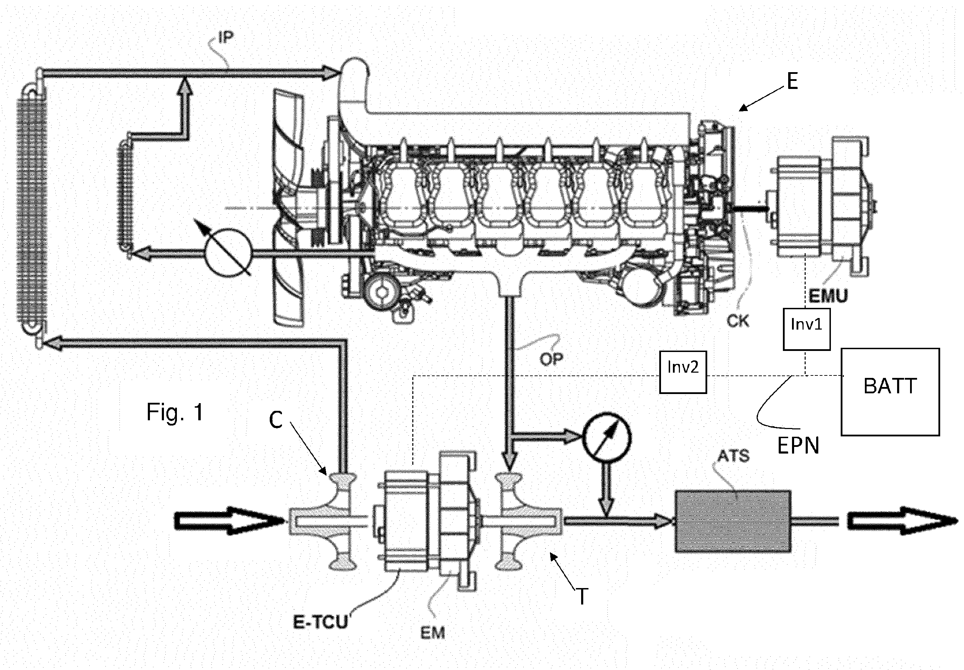

Example embodiments are, now, provided so that this disclosure will be thorough, for those skilled in the art. Figures 1 disclose an internal combustion engine E, preferably a diesel engine.

The engine E has an inlet line IP and an outlet line OP, such as the engine sucks fresh air from the environment through the inlet line and deliver exhaust gas in the environment through the outlet (or exhaust) line OP.

Along the outlet line, one or more abatement devices are arranged and grouped schematically into the after treatment system block labelled as ATS.

For example, for a diesel engine ATS can include a DOC (Diesel Oxidation Catalyst) and a DPF (Diesel Particulate Filter), a SCR (Selective Catalytic Reduction) and a dosing module arranged immediately upstream of the SCR to introduce a urea-based reducing agent, usually called with its commercial name AdBlue.

According to the present invention, an electric turbocharger E-TCU includes a turbine T operatively arranged on the outlet line such that to produce mechanical and electric energy from enthalpy content of the exhaust gas. Indeed, the turbine is connected to a compressor C through the rotor of an electric motor-generator EM.

The compressor C is arranged on the inlet line EP of the internal combustion engine E and the electric motor-generator EM has opposite ends of its rotor stably connected on one side with turbine and on the other opposite side with the compressor.

The turbine has preferably a variable geometry, or is a fixed geometry coupled with a bypass BP pipe suitable to bypass the turbine T, and on said bypass is arranged a controllable wastegate valve WG in order to adjust the amount of exhaust gas crossing the turbine T.

According to figure 1, the turbine T is arrange upstream of the ATS.

A BRM, labelled as EMU, is mechanically connected with the combustion engine crankshaft CK. The BRM is capable to supplement the internal combustion engine, working as a drive, or to generate electric energy, working as a generator.

The scheme includes an electric power network EPN. The EMU is electrically connected with the electric power network EPN through a first inverter Inv1. The latter is configured to control the operation of the EMU in order to work as drive or generator.

The electric motor-generator EM of the E-TCU is connected to the same electric power network EPN, through a second inverter Inv2. The second inverter, analogously to the first one, is configured to control the operation of the electric motor-generator EM.

A battery pack BATT is connected to the electric power network EPN to store and deliver electric energy from/over the electric power network.

Preferably, the same control unit ECU (not shown) arranged to control the internal combustion engine is configured to supervise the first and second inverter operation, such that their behavior is coordinated as described here below. According to a first aspect of the present invention, after the vehicle stop or move at a slow speed under 10 km/h, when the vehicle starts to move or accelerate, the E-TCU is controlled to boost the internal combustion engine, while the EMU is controlled to supplement the internal combustion engine with the residual available electric energy stored in the battery. In other words, according to the battery power capacity, the E-TCU takes precedence with respect to the EMU, because the torque increase delivered to the vehicle driveline caused by the E-TCU is sensitively higher than the torque increase caused by the EMU.

Indeed 15 kW in comparison with at least 200 kW developed by the main engine are rather negligible.

In case no residual energy is available, the EMU is not driven.

In case the battery pack is not capable to supply the E-TCU, the EMU is controlled to generate electric energy in order to supplement the battery pack.

According to this condition, this operation appear to be in strong contrast with the known operation of the BRM as described by prior art.

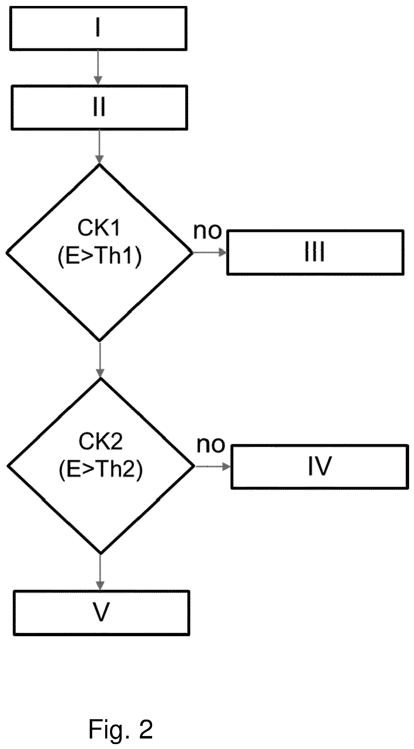

Figure 2 describes an exemplary implementation of the present invention:
- Step I: detect (i.e. foresee) a forthcoming vehicle start or acceleration at low speed or a stop condition,
- Step II: detect SOC (State of Charge) of battery pack
- Step CK1: is the available energy sufficient to boost engine?
- Step III(CK1==no): boost engine with e-turbocharger (E-TCU) while EMU supplements battery pack;
- Step CK2 (CK1==yes): is residual energy sufficient to drive EMU?
- Step IV(CK2==no): boost the engine and keep EMU deactivated;
- Step V(CK2== yes): boost the engine and EMU supplement combustion engine E.

Even if the E-TCU is faster than common turbochargers, its effectiveness can be improved by increasing the boost before the driver pushes the accelerator pedal. For example, when the driver releases the braking pedal, the E-TCU is immediately controlled to increase the boost. Thus, the downsized internal combustion engine behaves as a large displacement internal combustion engine.

ADAS "Advanced driver-assistance systems" can be implemented to foresee that the vehicle is going to be accelerated or is going to be started, and it can be implemented, in particular, to estimate when the vehicle will be accelerated and/or will be started, in order to obtain the above "anticipation" of the E-TCU, without, of course, waste precious electric energy. Indeed, an excessive early activation of the E-TCU could lead to early consumption of stored electric energy.

In other words, if the ADAS estimates that the vehicle will accelerate at the instant t0, the turbocharger acceleration starts in advance to be fully accelerated just in time for t0.

According to a second aspect of the present invention, when the engine is turned into brake mode, the fuel injection is cut off, and the exhaust valve operation is modified in order to suddenly release the trapped air from the cylinder (s) when the piston is close to the TDC (top dead center).

At the same time, the E-TCU is controlled to increase the boost, preferably at its maximum capability, and thus increasing the amount of air pumped in the engine cylinders.

At the same time the EMU is controlled to apply the maximum possible braking torque to the combustion engine, thus the corresponding electric energy produced is partly stored in the battery pack BATT and partly consumed directly by the E-TCU to boost the internal combustion engine.

In case the braking force has to be adjusted, this adjustment effect is operated by controlling the E-TCU boost and leaving the EMU developing its maximum braking torque.

This strategy permits to accumulate electric energy useful for other operating conditions, especially to boost the engine at vehicle start.

Indeed, engine brake operation, often precedes vehicle restart/acceleration.

Therefore, according to the present invention the engine braking strategy is modified to achieve advantages at vehicle start to boost the engine.

According to the present invention, it is possible to implement downsized internal combustion engines in commercial and industrial vehicles, even if the downsized internal combustion engines are unable, per se, to develop
- relevant engine brake torque at low engine speed and
- relevant positive torque at low engine speed;
without implementing powerful electric motors and corresponding storage batteries.

The present invention finds optimal application where the battery pack has a reduced power capacity and the BRM develops a power less than 1/10 of the power developed by the main engine (internal combustion engine).

Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well known processes, well-known device structures are disclosed.

This invention can be implemented advantageously in a computer program comprising program code means for performing one or more steps of such method, when such program is run on a computer. For this reason, the patent shall also cover such computer program and the computer-readable medium that comprises a recorded message, such computer-readable medium comprising the program code means for performing one or more steps of such method, when such program is run on a computer.

Many changes, modifications, variations and other uses and applications of the subject invention will become apparent to those skilled in the art after considering the specification and the accompanying drawings which disclose preferred embodiments thereof as described in the appended claims.

The features disclosed in the prior art background are introduced only in order to better understand the invention and not as a declaration about the existence of known prior art. In addition, said features define the context of the present invention, thus such features shall be considered in common with the detailed description.

Further implementation details will not be described, as the man skilled in the art is able to carry out the invention starting from the teaching of the above description.

## Claims

1. Method for improving performances of a combustion engine installed in a commercial or industrial vehicle, the method including the preliminary steps of
- providing the internal combustion engine (E) of a turbocharger (E-TCU) equipped with a first electric motor-generator (EM) operatively coupled with the turbocharger, such that a compressor (C) of the turbocharger is arranged to supercharge the internal combustion engine and a turbine (T) of the turbocharger is arranged on an engine exhaust line (EP) to extract mechanical energy from the exhaust gasses produced by the internal combustion engine,
- providing the internal combustion engine (E) with a second motor-generator (EMU) operatively coupled with a crankshaft (CK) of the internal combustion engine;
- providing the vehicle with an electric power network (EPN) suitable to operatively interconnect said first and second electric motor-generator and a battery pack(BATT) suitable to receive and supply electric energy from/over the electric power network;
the method comprising the step of detecting a forthcoming start or acceleration at low speed of the vehicle, and comprising the following steps, executed when the vehicle is going to start or to accelerate at low speed:
- checking an available electric energy stored in said battery pack,
- controlling said first electric motor-generator (EM) in order to speed up the compressor and, as a consequence, to boost the internal combustion engine and if a residual energy is available from the battery pack then
- controlling said second electric motor-generator (EMU) to supplement said internal combustion engine (E), otherwise if residual energy is not available,
- leaving said second electric motor-generator (EMU) disabled, and if said available electric energy stored in the battery pack is insufficient to supply said first electric motor-generator (EM), then
- controlling said second electric motor-generator (EMU) to supplement said battery pack (BATT) in supplying said first electric motor-generator.

2. Method according to claim 1, wherein the internal combustion engine is boosted by the first electric motor-generator before a vehicle driver pushes an accelerator pedal.

3. Method according to claim 1 or 2, **characterized by**:
- estimating an instant in which the vehicle will start or accelerate, by means of an Advanced driver-assistance system;
- anticipating the boost operation with respect to the instant estimated by said Advanced driver-assistance system.

4. Method according to claim 3, wherein said boost operation is coordinated by means of said Advanced driver-assistance system so as to minimize an anticipation of the boost operation with respect to the estimated instant.

5. Method according to anyone of the previous claims, wherein said turbine has a variable geometry or a wastegate valve arranged to controllably bypass the turbine; when the internal combustion engine speed exceeds a first predetermined speed threshold, said turbine or said wastegate valve are controlled to increase an amount of energy extracted by exhaust gasses produced by the internal combustion engine, and said first electric motor-generator is deactivated.

6. Method according to claim 5, wherein when the internal combustion engine speed exceeds a second predetermined speed threshold higher than said first speed threshold, the first electric motor-generator is controlled to generate electric energy to be stored in said battery pack.

7. Method according to any one of the previous claims, wherein available electric energy is used, in engine brake operation, according to the following steps:
- controlling said first electric motor-generator (EM) to increase the boost produced by said compressor, and
- controlling said second motor-generator (EMU) to apply its maximum possible braking torque to the combustion engine, such that a corresponding electric energy produced by the second motor-generator is at least partly consumed directly by the first electric motor-generator and a residual energy is stored in said battery pack.

8. Method according to claim 7, wherein an overall braking torque is adjusted by regulating said boost through said first electric motor-generator only.

9. Commercial or industrial vehicle equipped with
- an internal combustion engine (E) equipped with
+ an electric turbocharger (E-TCU) having a first electric motor-generator (EM) operatively coupled with a turbocharger, such that a relative compressor (C) of the turbocharger is arranged to supercharge the internal combustion engine and a relative turbine (T) of the turbocharger is arranged on an engine exhaust line (EP) to extract mechanical energy from the exhaust gasses produced by the internal combustion engine,
+ a second motor-generator (EMU) operatively coupled with a crankshaft (CK) of the internal combustion engine;
- an electric power network (EPN) suitable to operatively interconnect said first and second electric motor-generator and a battery pack(BATT) suitable to receive and supply electric energy from/over the electric power network;
- a control unit arranged to
+ detect a forthcoming start or acceleration at low speed of the vehicle;
+ check an available energy stored in said battery pack and
+ control said first electric motor-generator (EM) in order to boost the compressor and thus the internal combustion engine and, if a residual energy from said battery pack is available, to
+ control said second electric motor-generator (EMU) to supplement said internal combustion engine (E), otherwise, if no residual energy is available, to supply said first electric motor-generator (EM), to
+ leave said second electric motor-generator (EMU) disabled, and if said available electric power is insufficient to supply said first electric motor-generator (EM), then to
+ control said second electric motor-generator (EMU) to supplement said battery pack (BATT) in supplying said first electric motor-generator.

10. Vehicle according to claim 9, wherein said control unit is configured to boost the internal combustion engine by the first electric motor-generator before a vehicle driver pushes an accelerator pedal.

11. Vehicle according to claim 9 or 10, **characterized by** being further equipped with an Advanced driver-assistance system configured to estimate an instant in which the vehicle will start or accelerate at low speed, and wherein said control unit is configured to interface with said Advanced driver-assistance system in order to detect the estimated instant, and configured to anticipate the boost by the first electric motor-generator, with respect to the estimated instant.

12. Vehicle according to claim 11, wherein the control unit is configured to minimize an anticipation of the boost by the first electric motor-generator, with respect to said estimated instant.

13. Vehicle according to claim 12, wherein said turbine has a variable geometry or a wastegate valve arranged to controllably bypass the turbine; when the internal combustion engine speed exceeds a first predetermined speed threshold, said control unit being arranged to control said turbine or said wastegate valve to increase an amount of energy extracted by exhaust gasses produced by the internal combustion engine and to deactivate said first electric motor-generator.

14. Vehicle according to claim 13, wherein when the internal combustion engine speed exceeds a second predetermined speed threshold higher than said first speed threshold, the control unit is arranged to control said first electric motor-generator to generate electric energy to be stored in said battery pack.

15. Vehicle according to any one of the previous claims 9 - 14, wherein said control unit is arranged to use available electric energy, during engine brake operation, to
- control said first electric motor-generator (EM) so as to increase the boost produced by said compressor, and
- control said second motor-generator (EMU) so as to apply its maximum possible braking torque to the combustion engine, such that a corresponding electric energy produced by the secondo motor-generator is at least partly consumed directly by the first electric motor-generator and such that a residual energy is stored in said battery pack.

16. Vehicle according to claim 15, wherein said control unit is arranged to adjust an overall braking torque by regulating said boost through said first electric motor-generator only.

17. Computer program comprising computer program code means arranged to perform the method of any one of the claims 1 - 8, when said program is run on an engine control unit.

18. A computer readable medium having a computer program recorded thereon, said computer program being according to claim 17.
